# FASCICULE DE BREVET EUROPEEN

(11) **EP 1 447 591 B1**
(45) Date de publication et mention de la délivrance du brevet: **21.12.2005**
(21) Numéro de dépôt: 04290146.2
(22) Date de dépôt: 20.01.2004
(51) Int. Cl.: F16F 13/10

(54) **Support antivibratoire hydraulique**
Hydraulisches schwingungsdämpfendes Lager
Hydraulic anti vibration mount

(30) Priorité: 13.02.2003 FR 0301732
(43) Date de publication de la demande: 18.08.2004
(73) Titulaire: HUTCHINSON, 75008 Paris (FR)
(72) Inventeur: Thomazeau, Mikael, 28200 Chateaudun (FR)
(74) Mandataire: Burbaud, Eric

(56) Documents cités:
- DE-A- 4 435 431
- FR-A- 2 674 590
- US-A- 5 833 219
- PATENT ABSTRACTS OF JAPAN vol. 1995, no. 02, 31 mars 1995 (1995-03-31) & JP 06 307491 A (TOKAI RUBBER IND LTD), 1 novembre 1994 (1994-11-01)
- PATENT ABSTRACTS OF JAPAN vol. 009, no. 139 (M-387), 14 juin 1985 (1985-06-14) & JP 60 018632 A (BRIDGESTONE KK), 30 janvier 1985 (1985-01-30)
- PATENT ABSTRACTS OF JAPAN vol. 017, no. 282 (M-1420), 31 mai 1993 (1993-05-31) & JP 05 010375 A (TOKAI RUBBER IND LTD), 19 janvier 1993 (1993-01-19)

## Description

La présente invention est relative aux supports antivibratoires hydrauliques, destinés par exemple au montage des moteurs de véhicules automobiles sur les caisses de ces véhicules.

Plus particulièrement, la présente invention concerne un support antivibratoire hydraulique selon le préambule de la revendication 1, destiné à relier entre eux des premier et deuxième éléments rigides pour amortir et filtrer des vibrations entre ces éléments au moins selon un axe principal de vibration.

Le document US 5 833 219 décrit un exemple d'un tel support autivibratoire.

La présente invention a pour but de proposer un autre support antivibratoire de ce type.

A cet effet, l'invention propose un support hydraulique selon le revendication 1.

Grâce à ces dispositions, le support antivibratoire hydraulique selon l'invention permet de réduire considérablement le bruit de claquement de la membrane sur les grilles du dispositif de découplage. En effet les inventeurs de la présente invention se sont rendus compte que la disposition ci-dessus permettait d'atténuer fortement les bruits de claquement observés pendant le roulage du véhicule, notamment lorsque la chambre de travail tend à se comprimer brutalement du fait du passage du véhicule sur une irrégularité importante de la route.

Dans des modes de réalisation préférés du support antivibratoire hydraulique selon l'invention, on peut éventuellement avoir recours à l'une et/ou à l'autre des dispositions suivantes :
- le clapet de découplage présente un pourtour serré entre les grilles;
- le clapet de découplage présente une zone centrale serrée entre les grilles ;
- le clapet de découplage présente plusieurs membranes déformables distinctes ;
- la membrane déformable est séparée des première et deuxième grilles respectivement par des première et deuxième distances en position de repos, la première distance étant comprise entre 1,5 et 2,5 fois la deuxième distance ;
- la ou les membranes occupe(nt) entre 40% et 60% de la surface totale du clapet de découplage.

D'autres particularités et avantages de la présente invention apparaîtront dans la description ci-après d'exemples de réalisation non limitatifs, en référence aux dessins annexés, dans lesquels :
- la figure 1 est une vue en coupe verticale d'un support antivibratoire hydraulique selon une forme de réalisation de l'invention ;
- la figure 2 est une vue de détail montrant le clapet de découplage du support antivibratoire de la figure 1 ;
- la figure 3 est une vue de dessous du clapet de découplage de la figure 1 ;
- la figure 4 est une vue en coupe verticale d'un support antivibratoire hydraulique selon une deuxième forme de réalisation de l'invention.

Sur les différentes figures, les mêmes références désignent des éléments identiques ou similaires.

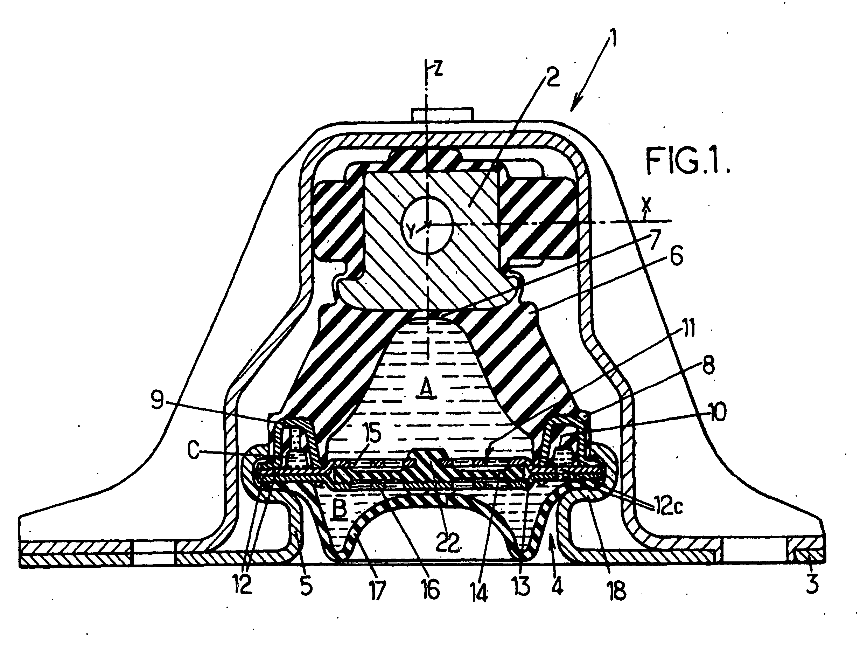

La figure 1 représente un support antivibratoire 1 qui comporte :
- une première armature métallique rigide 2, qui, dans l'exemple représenté, peut s'étendre longitudinalement selon un axe horizontal Y et qui est destinée à être fixée par exemple au bloc motopropulseur d'un véhicule,
- une deuxième armature métallique rigide 3 qui est destinée à être fixée par exemple à la caisse du véhicule, cette deuxième armature 3 se présentant, dans l'exemple considéré, sous la forme d'une plaque de tôle horizontale dotée d'une ouverture centrale 4 présentant un bord annulaire relevé 5 qui s'étend vers le haut,
- un corps en élastomère 6 qui présente une forme de cloche s'étendant selon un axe principal de vibration Z vertical, entre d'une part, un sommet 7 surmoulé et adhérisé sur la première armature 2 et d'autre part, une base annulaire 8 solidarisée avec la deuxième armature 3, le corps en élastomère 6 étant suffisamment résistant pour reprendre les efforts de compression dus au poids du bloc motopropulseur.

Avantageusement, la base annulaire 8 du corps en élastomère est renforcée par une couronne de tôle 9 qui est noyée dans ladite base et qui présente de préférence une section en U ouverte parallèlement à l'axe vertical Z en direction de la deuxième armature 3, c'est-à-dire vers le bas. La couronne 9 délimite ainsi un volume intérieur qui est partiellement rempli d'une masse d'élastomère délimitant une gorge 10 en arc de cercle, ouverte parallèlement à l'axe Z vers la deuxième armature 3.

Par ailleurs, le support antivibratoire 1 comporte en outre une cloison rigide 11 qui s'étend perpendiculairement à l'axe Z et qui s'applique avec étanchéité contre la base annulaire 8 du corps en élastomère, en délimitant avec celui-ci une chambre de travail A remplie de liquide.

La cloison 11 est constituée par deux pièces de tôle 12 découpées et embouties, qui sont accolées en délimitant entre elles un logement de clapet 13, dans lequel est disposé un clapet de découplage 14 en élastomère. Chacune des deux pièces de tôle 12 comporte une grille 15, 16. La grille supérieure 15 et la grille inférieure 16 font communiquer le logement de clapet 13 avec respectivement la chambre de travail A, une chambre de compensation B remplie de liquide également, par l'intermédiaire de trous de passage de liquide.

La chambre de compensation B, quant à elle, est séparée de la chambre de travail A par la cloison 11 et elle est délimitée entre ladite cloison 11 et une paroi souple en élastomère 17 présentant par exemple une forme de soufflet.

La base annulaire 8 du corps en élastomère, la cloison 11 et le bord périphérique de la paroi souple 17 peuvent être assemblés par sertissage de la deuxième armature 3.

Ainsi, ladite couronne 9 et la base 8 du corps en élastomère sont appliqués fortement contre la périphérie de la pièce de tôle 12 supérieure, elle-même appliquée contre la périphérie de la pièce de tôle 12 inférieure qui vient serrer la périphérie de la paroi souple 17 contre un épaulement 18 de la deuxième armature 3.

Les chambres hydrauliques A et B communiquent entre elles par un passage étranglé C rempli de liquide qui est délimité entre la gorge 10 susmentionnée et la pièce de tôle 12 supérieure.

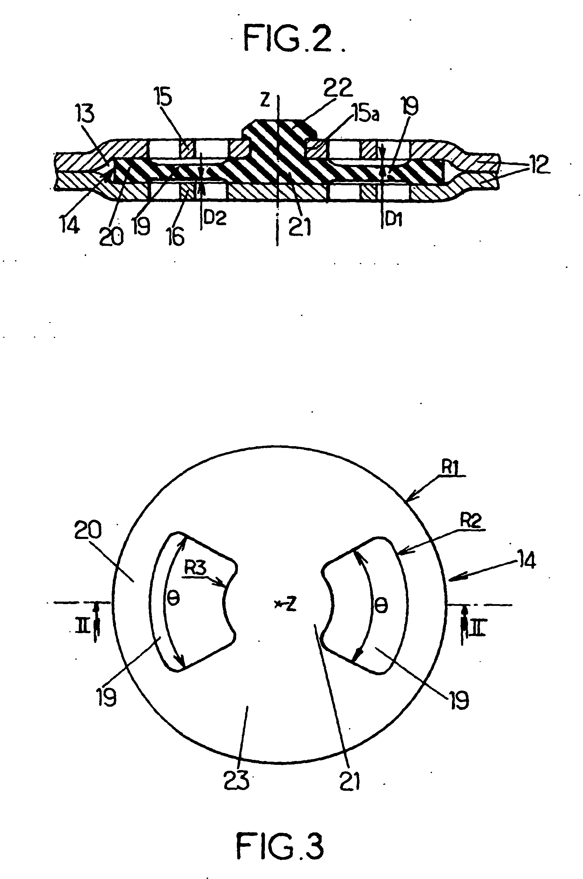

Comme représenté plus en détails sur la figure 3, le clapet de découplage 14 en élastomère se présente avantageusement sous la forme d'un disque de rayon R1 et centré sur l'axe Z.

Le clapet de découplage 14 présente au moins une membrane déformable 19 qui, dans la position de repos du clapet, c'est-à-dire tant que le véhicule ne roule pas et que son moteur est arrêté, se trouve à une distance D1 de la grille supérieure 15 et à une distance D2 de la grille inférieure 16, la distance D1 étant supérieure à la distance D2. Avantageusement, le rapport D1/D2 peut être compris par exemple entre 1,5 et 2,5.

Dans l'exemple particulier représenté sur les figures 2 et 3, le clapet de découplage 14 comporte deux membranes 19 qui constituent une relativement faible fraction de la surface totale du clapet de découplage 14, fraction comprise par exemple entre 40 et 60% de ladite surface totale.

Dans cet exemple, les parties épaisses du clapet de découplage 14 sont moulées d'une seule pièce avec les membranes 19 et lesdites parties épaisses présentent une épaisseur sensiblement égale à l'écartement entre les deux grilles 15, 16 de façon à être serrées entre lesdites deux grilles, ce qui permet de positionner les membranes 19 dans la disposition voulue au repos.

Les parties épaisses du clapet de découplage 14 peuvent comprendre par exemple un pourtour 20, une partie centrale 21 formée par exemple avec un téton 22 clipsé dans par exemple un orifice central 15a de la grille 15, et deux parties intermédiaires 23 qui séparent angulairement les deux membranes 19 autour de l'axe Z, lesquelles membranes 19 sont disposées symétriquement par rapport à l'axe Z.

Comme représenté sur la figure 3, chacune des membranes 19 peut être délimitée par exemple par un bord extérieur sensiblement circulaire centré sur l'axe Z, de rayon R2 inférieur à R1, et par un bord intérieur sensiblement circulaire centré sur l'axe Z, de rayon R3 inférieur à R2, ladite membrane étant délimitée angulairement par deux bords sensiblement radiaux qui forment entre eux, par rapport à l'axe Z, un angle θ compris par exemple entre 45 et 60°.

En présence de vibrations provenant du moteur et/ou de la caisse du véhicule, les membranes 19 débattent élastiquement entre les première et deuxième grilles 15, 16. Lorsqu'il s'agit de mouvements vibratoires de haute fréquence (par exemple, supérieure à 20 Hz) et de faible amplitude (par exemple inférieure à 1 mm), ces mouvements vibratoires sont filtrés par les membranes de découplage 19 qui oscillent librement entre les deux grilles 15, 16.

Lorsqu'il s'agit de mouvements vibratoires de relativement faible fréquence (par exemple inférieure à 20 Hz) et de relativement grande amplitude (par exemple supérieure à 1 mm), ils se traduisent par des transferts de liquide entre les chambres A et B par l'intermédiaire du passage étranglé C, qui génère un amortissement de ces mouvements vibratoires.

Dans les cas notamment de mouvements brusques et de grande amplitude entre le moteur et la caisse du véhicule (dus notamment au roulage du véhicule sur une irrégularité importante de la route), les phénomènes de claquements du clapet de découplage contre les grilles lors du transfert de liquide vers la chambre de compensation B sont réduits considérablement grâce aux dispositions de la présente invention, tout en maintenant un découplage satisfaisant (garanti par la distance totale de débattement D1+D2 du clapet 14) à haute fréquence et faible amplitude.

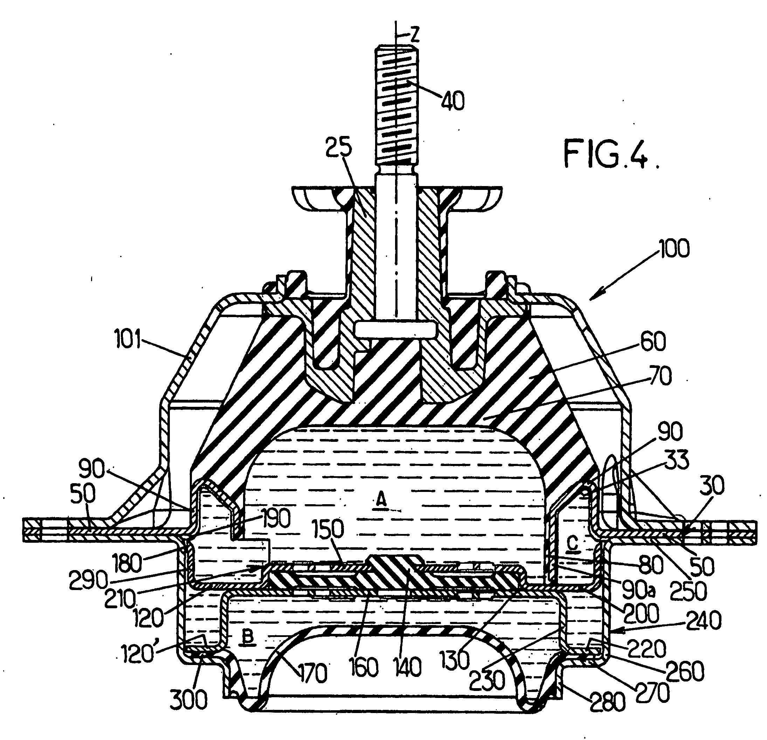

La figure 4 représente une vue en coupe verticale d'un support antivibratoire 100 selon un deuxième mode de réalisation de l'invention.

Le support antivibratoire hydraulique 100 comporte des première et deuxième armatures 25,30 qui sont par exemple destinées à être fixées respectivement au bloc motopropulseur et à la caisse d'un véhicule.

Dans l'exemple considéré, la première armature 25 x se présente sous la forme d'un plot métallique, réalisé par exemple en alliage léger, qui est centré sur un axe vertical Z et qui solidaire d'un goujon fileté 40 permettant par exemple la fixation du plot au bloc motopropulseur.

La deuxième armature 30, quant à elle, est formée par une couronne de tôle découpée et emboutie, également centrée sur l'axe Z. Dans l'exemple représenté, la deuxième armature 30 comporte une partie extérieure 50 qui s'étend dans un plan radial par rapport à l'axe Z et qui est destinée à être fixée par exemple à la caisse du véhicule, et une partie intérieure 90 creuse, à section sensiblement en forme de U inversé, formant une gorge annulaire 33 ouverte axialement à l'opposé de la première armature 25. La partie intérieure 90 forme en outre une jupe intérieure axiale 90a, qui s'étend vers le bas au-delà de la partie extérieure 50.

Les deux armatures 25, 30 sont reliées entre elles par un corps en élastomère 60 relativement épais, qui présente une résistance à la compression suffisante pour reprendre les efforts statiques dus au poids du bloc motopropulseur. Ce corps en élastomère 60 présente une paroi latérale en forme de cloche qui s'étend entre un sommet 70 surmoulé sur la première armature 25, et une base annulaire 80 qui est surmoulée sur la partie intérieure 90 de la deuxième armature.

Par ailleurs, la deuxième armature 30 est solidaire d'un capot limiteur 101 en tôle, qui présente une forme annulaire et recouvre avec jeu le corps en élastomère 60, en laissant le passage au goujon 4. Le capot 101 limite ainsi les débattements relatifs entre les première et deuxième armatures 25, 30.

La deuxième armature 30 est également solidaire d'une cloison rigide 110 qui délimite avec le corps en élastomère 60 une première chambre A remplie de liquide, dite chambre de travail.

Dans l'exemple considéré, la cloison rigide 110 est constituée de première et deuxième pièces de tôle embouties 120, 120' superposées, en forme de coupelles, qui forment respectivement dans leurs parties centrales une grille plate inférieure 160 et une grille plate supérieure 150 qui s'étendent perpendiculairement à l'axe central Z et qui délimitent entre elles un logement de clapet 130, dans lequel est disposé un clapet de découplage 140 en élastomère. La grille supérieure 150 et la grille inférieure 160 font communiquer le logement de clapet 130 avec respectivement la chambre de travail A, une chambre de compensation B remplie de liquide également, par l'intermédiaire de trous de passage de liquide.

La première pièce de tôle 120 comporte par exemple :
- un rebord annulaire 290 qui s'étend parallèlement à l'axe Z, ce rebord annulaire présentant un bord annulaire libre supérieur 180 en appui étanche contre une couche d'élastomère 190, laquelle couche 190 appartient au corps en élastomère 60 et est surmoulée sous la partie extérieure 50 de la deuxième armature,
- une partie annulaire 200 qui s'étend radialement vers l'intérieur à partir de l'extrémité inférieure du rebord 170, la jupe intérieure 90a de la deuxième armature étant en appui étanche contre cette partie annulaire 200,
- un ressaut 210 qui s'étend vers la chambre de travail A à partir du bord radialement intérieur de la partie annulaire 120,
- et ladite grille supérieure 150, qui prolonge le ressaut 210 radialement vers l'intérieur.

Par ailleurs, la deuxième pièce de tôle 120' comporte, dans l'exemple considéré :
- un bord d'appui extérieur annulaire 220 qui s'étend radialement par rapport à l'axe central Z,
- un ressaut annulaire 230 qui s'étend axialement parallèlement à l'axe Z vers la première pièce de tôle 120,
- et ladite grille inférieure 160, qui présente une périphérie extérieure en appui sous la partie annulaire 200 de la première pièce de tôle 120.

Le support antivibratoire 100 comporte en outre une embase 240 réalisée en tôle découpée et emboutie, qui comprend :
- un bord d'appui annulaire 250 qui est fixé à la partie extérieure 50 de la deuxième armature, par exemple par sertissage, et qui est en appui étanche contre ladite couche d'élastomère 190 sous la partie extérieure 50 de la deuxième armature,
- une paroi latérale annulaire axiale 260 qui s'étend à partir de la périphérie intérieure du bord d'appui 250, parallèlement à l'axe Z et en éloignement de la deuxième armature 30,
- un bord d'appui inférieur 270, qui prolonge radialement vers l'intérieur l'extrémité inférieure de la paroi latérale 260,
- et une nervure axiale 280 qui s'étend axialement à l'opposé du corps en élastomère 60 à partir de la portion radialement intérieure du bord d'appui 270.

Le bord d'appui 270 et la nervure 280 de l'embase 240 sont surmoulés par un soufflet souple 170 en élastomère, qui forme également une couche 300 d'élastomère recouvrant le bord d'appui 270 de l'embase et contre laquelle le bord d'appui 220 de la deuxième pièce de tôle 120' vient en appui étanche.

Ainsi, le soufflet 170 délimite avec la cloison 110 la deuxième chambre B.

Cette chambre de compensation B communique avec la chambre de travail A par l'intermédiaire d'un passage étranglé C annulaire.

Le clapet de découplage 140 présente les mêmes caractéristiques, notamment par rapport aux grilles respectives 150 et 160 que le clapet 14 représenté sur les figures 1 et 2 et décrit plus haut, notamment par rapport aux grilles respectives 15 et 16.

Comme le support antivibratoire des figures 1 à 3, le support antivibratoire 100 représenté en figure 4 permet de réduire de façon notable, grâce aux dispositions de la présente invention, les phénomènes de claquements de clapet de découplage contre les grilles, en cas notamment de mouvements brusques entre le bloc motopropulseur et la caisse du véhicule.

## Revendications

1. Support antivibratoire hydraulique destiné à relier entre eux des premier et deuxième éléments rigides pour amortir et filtrer des vibrations entre ces éléments au moins selon un axe principal de vibration (Z), ce support comportant
- des première et deuxième armatures rigides (2, 3 ; 25,30) destinées à être fixées respectivement aux premier et deuxième éléments rigides à réunir,
- un corps en élastomère (6 ; 60) reliant entre elles les première et deuxième armatures (2, 3 ; 25,30) et adapté pour supporter une charge permanente selon l'axe principal de vibration (Z),
- une chambre de travail (A) remplie de liquide, au moins partiellement délimitée par le corps en élastomère (6 ; 60),
- une paroi souple en élastomère (17 ; 170) qui est solidaire de la deuxième armature (3 ; 30),
- une chambre de compensation (B) remplie de liquide et délimitée partiellement par la paroi souple en élastomère (17 ; 170),
- un passage étranglé (C) rempli de liquide qui fait communiquer la chambre de travail (A) avec la chambre de compensation (B),
- et un dispositif de découplage (14, 15, 16 ; 140,150,160) comprenant un clapet de découplage (14 ;140) en élastomère interposé entre une première grille (15 ;150) qui communique avec la chambre de travail (A) et une deuxième grille (16) qui communique avec la chambre de compensation (B), le clapet de découplage (14 ; 140) comprenant au moins une membrane déformable (19) qui est maintenue dans une position de repos en l'absence de vibrations et qui est adaptée pour débattre élastiquement entre les première et deuxième grilles (15,16 ; 150,160) en présence de vibrations,
la membrane déformable (19), dans la position de repos, étant plus proche de la deuxième grille (16 ; 160) que de la première grille (15 ; 150),
**caractérisé en ce que**
le clapet de découplage, à l'exception de la membrane (19), est serré entre les grilles (15,16 ; 150,160).

2. Support antivibratoire selon la revendication 1, dans lequel la membrane déformable (19) est séparée des première et deuxième grilles (15,16 ; 150,160) respectivement par des première et deuxième distance (D1, D2) en position de repos, les valeurs des première et seconde distances étant non nulles.

3. Support antivibratoire selon la revendication 1 ou la revendication 2, dans lequel le clapet de découplage présente un pourtour (20) serré entre les grilles (15, 16 ; 150,160).

4. Support antivibratoire selon l'une quelconque des revendications précédentes, dans lequel le clapet de découplage (14 ; 140) présente une zone centrale (21) serrée entre les grilles.

5. Support antivibratoire selon l'une quelconque des revendications précédentes, dans lequel le clapet de découplage (14 ; 140) présente plusieurs membranes déformables (19) distinctes.

6. Support antivibratoire selon l'une quelconque des revendications précédentes, dans lequel la membrane déformable (19) est séparée des première et deuxième grilles (15,16 ; 150,160) respectivement par des première et deuxième distances (D1, D2) en position de repos, la première distance (D1) étant comprise entre 1,5 et 2,5 fois la deuxième distance (D2).

7. Support antivibratoire selon l'une quelconque des revendications précédentes, dans lequel la ou les membranes (19) occupe (nt) entre 40% et 60% de la surface totale du clapet de découplage (14 ; 140).

## Patentansprüche

1. Schwingungsdämpfendes hydraulisches Lager zum Verbinden von ersten und zweiten steifen Elementen untereinander, um Schwingungen zwischen diesen Elementen wenigstens entlang einer Hauptschwingungsachse (Z) zu dämpfen und zu filtern, wobei dieses Lager umfasst:
- erste und zweite steife Bewehrungen (2,3; 25,30), die vorgesehen sind, um jeweils an den zu verbindenden ersten und zweiten steifen Elementen befestigt zu werden,
- einen Elastomerkörper (6; 60), der die erste und die zweite Bewehrung (2, 3; 25, 30) miteinander verbindet und eingerichtet ist in, um eine permanente Last entlang der Hauptschwingungsachse (Z) zu tragen,
- eine mit Flüssigkeit gefüllte Arbeitskammer (A), die wenigstens teilweise durch den Elastomerkörper (6; 60) begrenzt ist,
eine nachgiebige Wand aus Elastomer (17; 170), die mit der zweiten Bewehrung (3; 30) fest verbunden ist;
- eine mit Flüssigkeit gefüllte und teilweise durch die nachgiebige Wand aus Elastomer (17; 170) begrenzte Kompensationskammer (B),
- ein mit Flüssigkeit gefüllter Engpass (10), der die Arbeitskammer (A) mit der Kompensationskammer (B) verbindet,
- und eine Entkopplungsvorrichtung (14, 15, 16; 140, 150, 160), die ein Entkopplungsventil (14; 140) aus Elastomer umfasst, das zwischen einem ersten Gitter (15; 150), das mit der Arbeitskammer (A) kommuniziert, und einem zweiten Gitter (16) angeordnet ist, das mit der Kompensationsammer (B) kommuniziert, wobei das Entkopplungsventil (14; 140) wenigstens eine verformbare Membran (19) umfasst, die in Abwesenheit von Schwingungen in einer Ruheposition gehalten ist und die eingerichtet ist, in sich Anwesenheit von Schwingungen zwischen dem ersten und dem zweiten Gitter (15,16; 150, 160) zu bewegen, wobei die verformbare Membran (19) in der Ruheposition näher an dem zweiten Gitter (16; 160) als an dem ersten Gitter (15; 150) ist,
**dadurch gekennzeichnet, dass**
das Entkopplungsventil mit Ausnahme der Membran (19) zwischen den Gittern (15,16; 150, 160) eingeklemmt ist.

2. Schwingungsdämpfendes Lager nach Anspruch 1, bei dem die verformbare Membran (19) vom ersten und zweiten Gitter (15,16; 150,160) in der Ruheposition jeweils durch einen ersten bzw. einen zweiten Abstand getrennt ist, wobei die Werte des ersten und des zweiten Abstandes nicht Null sind.

3. Schwingungsdämpfendes Lager nach Anspruch 1 oder Anspruch 2, bei dem das Entkopplungsventil einen zwischen den Gittern (15,16; 150, 160) eingeklemmten Umfang (20) aufweist.

4. Schwingungsdämpfendes Lager nach einem beliebigen der vorhergehenden Ansprüche, bei dem das Entkopplungsventil (14; 140) eine zwischen den Gittern eingeklemmte zentrale Zone (21) aufweist.

5. Schwingungsdämpfendes Lager nach einem beliebigen der vorhergehenden Ansprüche, bei dem das Entkopplungsventil (14; 140) mehrere getrennte verformbare Membranen (19) aufweist.

6. Schwingungsdämpfendes Lager nach einem beliebigen der vorhergehenden Ansprüche, bei dem die verformbare Membran (19) vom ersten und zweiten Gitter (14,16; 150, 160) in der Ruheposition jeweils durch einen ersten und einen zweiten Abstand (D1, D2) getrennt ist, wobei der erste Abstand (D1) zwischen dem 1,5-fachen und dem 2,5-fachen des zweiten Abstandes (D2) beträgt.

7. Schwingungsdämpfendes Lager nach einem beliebigen der vorhergehenden Ansprüche, bei dem die Membran(en) (19) zwischen 40 Prozent und 60 Prozent der Gesamtoberfläche des Entkopplungsventils (14; 140) belegt/belegen.

## Claims

1. A hydraulic antivibration support for interconnecting first and second rigid elements in order to damp and filter vibration between said elements at least along a main vibration axis (Z), the support comprising:
first and second rigid strength members (2, 3; 25, 30) for fastening respectively to the first and second rigid elements that are to be united;
· an elastomer body (6; 60) interconnecting the first and second strength members (2, 3; 25, 30) and adapted to accommodate a permanent load along the main vibration axis (Z);
· a liquid-filled working chamber (A) defined at least in part by the elastomer body (6; 60);
· a flexible wall (17; 170) made of elastomer and secured to the second strength member (3; 30);
· a liquid-filled compensation chamber (B) defined in part by the flexible wall (17; 170) made of elastomer;
· a liquid-filled constricted passage (C) putting the working chamber (A) into communication with the compensation chamber (B); and
· a decoupling device (14, 15, 16; 140, 150, 160) comprising a decoupling valve member (14; 140) made of elastomer interposed between a first grid (15; 150) which communicates with the working chamber (A) and a second grid (16) which communicates with the compensation chamber (B), the decoupling valve member (14; 140) comprising at least one deformable membrane (19) which is held in a rest position in the absence of vibration and which is adapted to move elastically between the first and second grids (15, 16; 150, 160) in the presence of vibration;
the deformable membrane (19), when in its rest position, being closer to the second grid (16; 160) than to the first grid (15; 150),
**characterized in that** the decoupling valve member, excepting the membrane (19), is clamped between the grids (15, 16; 150, 160).

2. An antivibration support according to claim 1, wherein the deformable membrane (19) is separated from the first and second grids (15, 16 ; 150, 160) respectively by first and second distances (D1, D2) in the rest position, the valves of the first and second distances being different from O.

3. An antivibration support according to claim 1 or claim 2, in which the decoupling valve member presents a periphery (20) clamped between the grids (15, 16; 150, 160).

4. An antivibration support according to any preceding claim, in which the decoupling valve member (14; 140) presents a central zone (21) clamped between the grids.

5. An antivibration support according to any preceding claim, in which the decoupling valve member (14; 140) presents a plurality of distinct deformable membranes (19).

6. An antivibration support according to any preceding claim, in which, in the rest position, the deformable membrane (19) is separated from the first and second grids (15, 16; 150, 160) by respective first and second distances (D1, D2), with the first distance (D1) lying in the range 1.5 times to 2.5 times the second distance (D2).

7. An antivibration support according to any preceding claim, in which the membrane(s) (19) occupy(ies) 40% to 60% of the total area of the decoupling valve member (14; 140).
